# EUROPEAN PATENT APPLICATION

(11) **EP 4 410 537 A1**
(43) Date of publication of application: **07.08.2024**
(21) Application number: 22876354.6
(22) Date of filing: 28.09.2022
(51) Int. Cl.: B32B 7/06, B32B 7/023, B32B 27/00, C09J 7/35, C09J 201/00

(54) **TRANSFER FILM AND ANTI-GLARE MOLDED BODY**

(30) Priority: 28.09.2021 JP 2021158205
(71) Applicant: Dai Nippon Printing Co., Ltd., Tokyo 162-8001 (JP)
(72) Inventor: MIYAZAKI, Saori, Tokyo 162-8001 (JP); FURUTA, Satoshi, Tokyo 162-8001 (JP); AKITA, Yasuhiro, Tokyo 162-8001 (JP)
(74) Representative: Müller-Boré & Partner Patentanwälte PartG mbB
(86) International application number: PCT/JP2022/036210
(87) International publication number: WO 2023/054488

(57) **Abstract**

A transfer film includes a base film and a transfer layer, wherein the transfer layer includes a surface protection layer and an adhesive layer, the surface protection layer forms a surface layer of the transfer layer facing the base film, a test piece obtained by transferring the transfer layer to a 2-mm thickness polycarbonate board has a haze of 5% or more and 30% or less, and the 60-degree specular glossiness measured for a surface of the surface protection layer of the test piece is 60% or more and 120% or less.

## Description

### Technical Field

The present disclosure relates to a transfer film and an anti-glare molded body.

### Background Art

In order to impart scratch resistance or the like to a molded body, a surface protection layer is provided on a surface of the molded body. The surface protection layer is formed by, for example, coating or using a transfer film (for example, see PTL 1).

### Citation List

### Patent Literature

PTL 1: Japanese Unexamined Patent Application Publication No. 2004-345228

### Summary of Invention

### Technical Problem

Molded bodies that are used outdoors are required to be transparent depending on the application, and it is desirable in some cases to further have anti-glare properties, in addition to transparency. The present inventors studied to enhance anti-glare properties by using an anti-glare film. However, according to studies by the present inventors, it was demonstrated that when very high anti-glare properties are imparted to a molded body for outdoor use by using a transfer film, the transparency becomes insufficient for outdoor use.

One object of the present disclosure is to achieve both transparency and anti-glare properties of a transfer film that can be used for transferring a transfer layer including a surface protection layer onto a transfer target.

### Solution to Problem

The transfer film of the present disclosure includes a base film and a transfer layer, wherein the transfer layer includes a surface protection layer and an adhesive layer, the surface protection layer forms a surface layer of the transfer layer facing the base film, a test piece obtained by transferring the transfer layer to a 2-mm thickness polycarbonate board has a haze of 5% or more and 30% or less, and the 60-degree specular glossiness measured for a surface of the surface protection layer of the test piece is 60% or more and 120% or less.

The anti-glare molded body of the present disclosure includes a molded body and a surface protection film disposed on at least a portion of a surface of the molded body. The surface protection film is a transfer layer of the transfer film, and a surface protection layer of the transfer layer forms at least a portion of the surface layer of the anti-glare molded body.

### Advantageous Effects of Invention

According to the present disclosure, both transparency and anti-glare properties can be achieved in a transfer film that can be used for transferring a transfer layer including a surface protection layer onto a transfer target.

### Brief Description of Drawings

[Fig. 1] Fig. 1 is a schematic cross-sectional view of one embodiment of the transfer film of the present disclosure.
[Fig. 2] Fig. 2 is a schematic cross-sectional view of one embodiment of the transfer film of the present disclosure.
[Fig. 3] Fig. 3 is a schematic cross-sectional view of one embodiment of the anti-glare molded body of the present disclosure.

### Description of Embodiments

Embodiments of the transfer film and so on of the present disclosure will now be described in detail. The transfer film and so on of the present disclosure can be implemented by various different forms and should not be interpreted as being limited to the description of the embodiments illustrated below. In order to make the explanation clearer, the drawings may schematically illustrate the width, thickness, shape, and so on of each layer compared with the embodiments, but are merely examples and do not limit the interpretation of the transfer film and so on of the present disclosure. In the present description and each drawing, elements that are similar to those already described for a previous figure are given the same reference signs, and detailed explanations may be omitted appropriately.

In the present disclosure, when multiple upper limit candidates and multiple lower limit candidates are mentioned for a certain parameter, the numerical range of the parameter may be constructed by combining any one of the upper limit candidates and any one of the lower limit candidates. Examples of the parameter include physical property value, component content ratio, and layer thickness. As an example, a description that "A parameter B is preferably A1 or more, more preferably A2 or more, and further preferably A3 or more. The parameter B is preferably A4 or less, more preferably A5 or less, and further preferably A6 or less" will be described. In this example, the numerical range of the parameter B may be A1 or more and A4 or less, A1 or more and A5 or less, A1 or more and A6 or less, A2 or more and A4 or less, A2 or more and A5 or less, A2 or more and A6 or less, A3 or more and A4 or less, A3 or more and A5 or less, or A3 or more and A6 or less.

Each of the components (e.g., resin material, curable resin, particle, additive, weather resistance improving agent, silicone compound, adhesive resin, and organic solvent) appearing in the following description may be used alone or in combination of two or more.

The transfer film of the present disclosure includes a base film and a transfer layer. The transfer layer is removably provided on the base film. The transfer layer includes a surface protection layer and an adhesive layer in this order from the base film side in the thickness direction. The surface protection layer forms a surface layer of the transfer layer facing the base film.

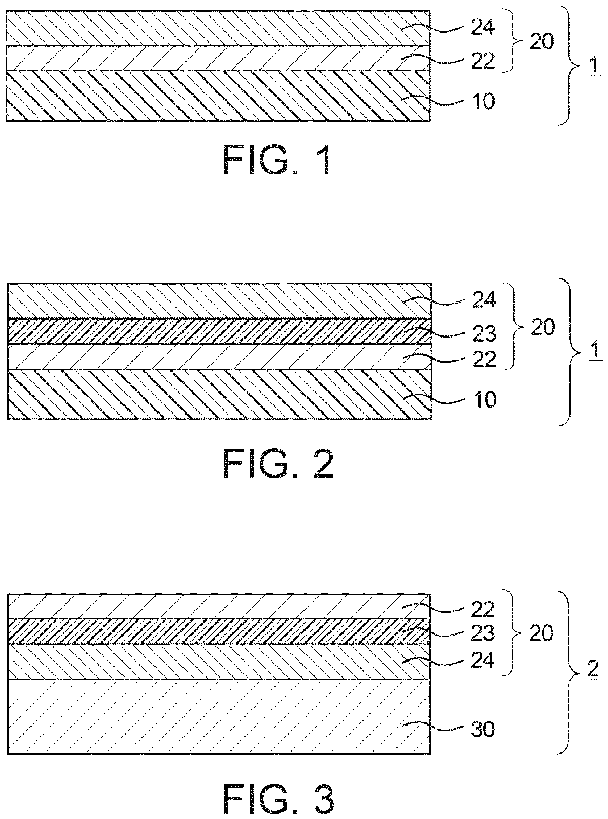

Figs. 1 and 2 show configurations of embodiments of the transfer film of the present disclosure.

The transfer film 1 of Fig. 1 includes a base film 10 and a transfer layer 20 removably disposed on the base film 10. The transfer layer 20 includes a surface protection layer 22 and an adhesive layer 24 in this order from the base film 10 side in the thickness direction. That is, the base film 10, the surface protection layer 22, and the adhesive layer 24 are stacked in the thickness direction which is the vertical direction of the paper surface in Fig. 1.

The transfer layer 20 in the transfer film 1 of Fig. 2 includes a primer layer 23 between a surface protection layer 22 and an adhesive layer 24. The transfer layer 20 includes the surface protection layer 22, the primer layer 23, and the adhesive layer 24 in this order from the base film 10 side in the thickness direction. That is, the base film 10, the surface protection layer 22, the primer layer 23, and the adhesive layer 24 are stacked in the thickness direction which is the vertical direction of the paper surface in Fig. 2.

In the transfer film of the present disclosure, the transfer layer may further include another layer that is different from the surface protection layer, the primer layer, and the adhesive layer. As such an additional layer, a known layer can be appropriately selected and used.

The transfer film of the present disclosure is characterized in that a test piece obtained by transferring the transfer layer to a 2-mm thickness polycarbonate board has a haze of 5% or more and 30% or less and that the 60-degree specular glossiness measured for a surface of the surface protection layer of the test piece is 60% or more and 120% or less. A transfer layer having optical properties of an excellent balance between haze and glossiness can be formed on a molded body as a transfer target by using the transfer film of the present disclosure. Consequently, the anti-glare properties can be improved while securing transparency of the molded body.

The above optical properties are suitable for molded bodies that are used outdoors and required to have transparency and anti-glare properties. For example, the transparent resin molded body constituting a soundproof wall or a windshield wall that is installed on a general road, expressway, or the like desirably has both transparency and anti-glare properties. The transparency herein refers to a degree allowing the background to be highly visible so as to suppress a driver of a car from, for example, falling asleep, and the anti-glare property refers to a degree allowing reflection of sunlight that affects the surrounding environment and so on to be suppressed. The anti-glare properties of the transparent resin molded body can be improved, while securing transparency, by transferring the transfer layer onto the transparent resin molded body by using the transfer film of the present disclosure.

In the present disclosure, the optical properties, such as haze, 60-degree specular glossiness, and total luminous transmittance, of the transfer film are measured as follows. First, as a transfer target, a 2-mm thickness polycarbonate board (haze: 0.8%, total luminous transmittance: 88.4%, 60-degree specular glossiness: 170.0%) is provided. A transfer film is attached to one side of this polycarbonate board such that the adhesive layer of the transfer film is in contact with the polycarbonate board. Secondly, the base film is peeled from the transfer layer of the transfer film. Thus, a test piece including the polycarbonate board and the transfer layer transferred on the polycarbonate board is obtained. The surface protection layer forms a surface layer on one side of the test piece. The optical properties such as haze, 60-degree specular glossiness, and total luminous transmittance are evaluated using the obtained test piece.

In the transfer film of the present disclosure, it is sufficient that the transfer film before a weather resistance test described later satisfies the requirements regarding the haze and 60-degree specular glossiness. From the viewpoint of weather resistance, in the transfer film of the present disclosure, it is preferable that the transfer film after a weather resistance test described later satisfies the requirements regarding the haze and 60-degree specular glossiness.

In the transfer film of the present disclosure, the haze is 5% or more and 30% or less, preferably 5% or more and 26% or less, more preferably 5% or more and 20% or less, and further preferably 5% or more and 15% or less. When the haze is within the above range, for example, the surface protection layer has an excellent balance between anti-glare properties and transparency. In the present disclosure, the haze is measured in accordance with JIS K7105 by disposing a test piece such that the polycarbonate board faces the photodetector side and the surface protection layer faces the light source side.

In the transfer film of the present disclosure, the 60-degree specular glossiness (Gs60°) is 60% or more and 120% or less, preferably 80% or more, and preferably 105% or less. When the Gs60° is within the above range, for example, the balance between anti-glare properties and transparency by the surface protection layer is excellent. In the present disclosure, the Gs60° is measured for a surface of the surface protection layer of the test piece at an incidence angle of 60 degrees in accordance with JIS Z8741-1997.

In the transfer film of the present disclosure, the total luminous transmittance is preferably 80% or more, more preferably 82% or more, and further preferably 84% or more. Although a higher total luminous transmittance is preferable from the viewpoint of transparency, the upper limit may be, for example, 98% or 95%. In the present disclosure, the total luminous transmittance is measured in accordance with JIS K7105.

In the transfer film of the present disclosure, the maximum height Rz of the surface of the surface protection layer facing the base film is preferably 0.5 µm or more, more preferably 0.6 µm or more, and further preferably 0.7 µm or more and is preferably 3 µm or less, more preferably 2.5 µm or less, and further preferably 1.8 µm or less. Consequently, for example, the balance between anti-glare properties and transparency by the surface protection layer can be more improved.

In the transfer film of the present disclosure, the arithmetic average roughness Ra of the surface of the surface protection layer facing the base film is preferably 2 µm or less, more preferably 1.5 µm or less, further preferably 1 µm or less, and particularly preferably 0.5 µm or less. The lower limit of the Ra is not particularly limited, but may be, for example, 0.05 µm. When the Ra is within the above range, for example, the surface protection layer has excellent anti-glare properties.

In the transfer film of the present disclosure, the mean length RSm of roughness curve element of the surface of the surface protection layer facing the base film is preferably 10 µm or more, more preferably 20 µm or more, and further preferably 30 µm or more and is preferably 60 µm or less, more preferably 55 µm or less, and further preferably 50 µm or less.

The above Rz, Ra, and RSm are measured in accordance with JIS B0601-2001.

In the transfer film of the present disclosure, the transfer layer is transferred as a surface protection film on the molded body which is a transfer target. The use of the transfer film of the present disclosure can impart, for example, excellent anti-glare properties, scratch resistance, and weather resistance to a molded body. The transfer film of the present disclosure can be suitably applied to a molded body for outdoor use, for example, a molded body that is exposed to direct sunlight or wind and rain and is required to have strict weather resistance.

A surface protection layer can be easily formed on at least a portion of a surface of a molded body by a process called a transfer process that is environmentally friendly process without discharging an organic solvent by using the transfer film of the present disclosure.

A configuration of the transfer film of the present disclosure will now be described in detail.

The transfer film of the present disclosure includes a base film.

As the base film, for example, a film made of a resin material (hereinafter, also referred to as "resin film") can be used. Examples of the resin material include polyester, polyolefin, polystyrene, vinyl resin, (meth)acrylic resin, polyamide, polyimide, and polycarbonate. In the present disclosure, the term "(meth)acrylic" encompasses both "acrylic" and "methacrylic", and the term "(meth)acrylate" encompasses both "acrylate" and "methacrylate".

The base film is preferably a polyester film or a polyolefin film. When the base film is these films, for example, a surface protection layer can be easily formed on this film.

Examples of the polyester include polyethylene terephthalate (PET), polybutylene terephthalate (PBT), polyethylene naphthalate (PEN), and a polyethylene terephthalate-isophthalate copolymer. Among them, PET and PBT are preferable, and PET is more preferable, from the viewpoint of hardly causing thermal contraction when the transfer film is manufactured and contraction due to irradiation of ionizing radiation.

Examples of the polyolefin include polyethylene, polypropylene, polybutene, an ethylene-propylene copolymer, and an ethylene-propylene-butene copolymer. Among them, polypropylene is preferable from the viewpoint of hardly causing thermal contraction when the transfer film is manufactured and contraction due to irradiation of ionizing radiation.

The resin film may be a stretched film or an unstretched film and is preferably a stretched film. The stretching magnification of the stretched film in the machine direction (MD) and/or the transverse direction (TD) is, for example, 5 times or more and 30 times or less. When the resin film is a stretched film, for example, it is possible to suppress thermal contraction of the resin film caused by heat treatment when the transfer film is manufactured and contraction of the resin film caused by crosslinking treatment by irradiation of ionizing radiation, and the dimensional stability of the transfer film is enhanced.

The stretched film may be a uniaxially stretched film or a biaxially stretched film. From the viewpoint of hardly causing thermal contraction when the transfer film is manufactured and contraction due to irradiation of ionizing radiation, a biaxially stretched film is preferable.

The haze of the base film is preferably 10% or more, more preferably 20% or more, and further preferably 25% or more and is preferably 80% or less and more preferably 60% or less. When the haze is within the above range, for example, good anti-glare properties and transparency can be imparted to the surface protection layer.

The 60-degree specular glossiness (Gs60°) of the base film is preferably 140% or less, more preferably 120% or less, further preferably 110% or less, and still further preferably 100% or less and is preferably 25% or more, more preferably 30% or more, and further preferably 40% or more. When the Gs60° is within above range, for example, good anti-glare properties and transparency can be imparted to the surface protection layer.

The total luminous transmittance of the base film is preferably 75% or more, more preferably 80% or more, and further preferably 82% or more. The upper limit of the total luminous transmittance is not particularly limited, but may be, for example, 98% or 95%.

For example, the surface of a surface protection layer can be shaped by the surface shape of the base film by forming the surface protection layer on the base film having the above optical properties. Accordingly, the anti-glare properties by the surface protection layer can be improved. Consequently, anti-glare properties can be improved by a simple method compared with a use of an embossing roll.

The maximum height Rz of the surface of the base film where the surface protection layer is provided is preferably 0.4 µm or more, more preferably 0.5 µm or more, and further preferably 0.7 µm or more and is preferably 2.7 µm or less, more preferably 2.3 µm or less, and further preferably 1.8 µm or less.

The arithmetic average roughness Ra of the surface of the base film where the surface protection layer is provided is preferably 0.03 µm or more, more preferably 0.05 µm or more, and further preferably 0.08 µm or more and is preferably 0.4 µm or less, more preferably 0.3 µm or less, and further preferably 0.2 µm or less.

The mean length RSm of roughness curve element of the surface of the base film where the surface protection layer is provided is preferably 30.0 µm or more, more preferably 35.0 µm or more, and further preferably 40.0 µm or more and is preferably 70.0 µm or less, more preferably 60.0 µm or less, and further preferably 50.0 µm or less.

The above Rz, Ra, and RSm are measured in accordance with JIS B0601-2001.

The surface of a surface protection layer can be shaped into, for example, an uneven structure by forming the surface protection layer on a base film having the above uneven structure on the surface. Accordingly, the anti-glare properties by the surface protection layer can be improved. Consequently, anti-glare properties can be improved by a simple method compared with a use of an embossing roll.

The base film may have a single layer structure or a multilayer structure. The base film may be, for example, a single layer of a resin film or a stack of resin films. The stack of resin films can be produced using, for example, a dry lamination method, a wet lamination method, or an extrusion method.

The surface of the base film on which the surface protection layer is provided may be subjected to known release treatment as needed or may be provided with a release layer of a silicone resin or the like. Consequently, for example, the release properties between the surface protection layer and the base film at the time of transfer can be improved.

The thickness of the base film is preferably 5 µm or more and more preferably 10 µm or more and is preferably 200 µm or less and more preferably 100 µm or less. When the base film has a multilayer structure, the entire multilayer structure preferably has a thickness within the above range.

The transfer film of the present disclosure includes a surface protection layer.

The surface protection layer is a layer that is transferred onto a molded body, which is a transfer target, via an adhesive layer and then constitutes a surface layer of the obtained anti-glare molded body. The surface protection layer is, for example, a layer that imparts anti-glare properties to the transfer target and, in one embodiment, may be a layer that further imparts scratch resistance and weather resistance.

The surface protection layer in one embodiment is in contact with the base film.

The surface protection layer in one embodiment contains a cured product of a curable resin. The surface protection layer in one embodiment is constituted of a cured product of a curable resin composition containing a curable resin. Consequently, for example, scratch resistance can be improved.

Examples of the curable resin include a thermosetting resin and an ionizing radiation-curable resin. Among them, the ionizing radiation-curable resin is preferable from the viewpoint of improving scratch resistance and weather resistance.

Examples of the thermosetting resin include unsaturated polyester, thermosetting polyurethane, a thermosetting (meth)acrylic resin, an epoxy resin, an amino-alkyd resin, a melamine resin, a guanamine resin, and a urea resin.

The ionizing radiation-curable resin is a resin that is cured by irradiation of ionizing radiation. Examples of the ionizing radiation include electromagnetic waves such as ultraviolet rays (UV), X-rays, and γ-rays; and charged particle beams such as electron beams (EB), α-rays, and ion beams. Among them, ultraviolet rays and electron beams are preferable, and electron beams are more preferable. That is, the surface protection layer is preferably a resin layer cured by electron beam irradiation.

Examples of the ionizing radiation-curable resin include a polymerizable oligomer and a polymerizable prepolymer. Examples of the polymerizable oligomer and polymerizable prepolymer include oligomers and prepolymers having a radical polymerizable unsaturated group in its molecule, specifically, urethane (meth)acrylates such as polyether urethane (meth)acrylate, polycarbonate urethane (meth)acrylate, polyester urethane (meth)acrylate, and caprolactone urethane (meth)acrylate; and epoxy (meth)acrylate, polyester (meth)acrylate, polyether (meth)acrylate, acrylic (meth)acrylate, and polybutadiene (meth)acrylate. Among them, urethane (meth)acrylate is preferable.

As the polymerizable oligomer and polymerizable prepolymer, polyfunctional oligomers and prepolymers having multiple radical polymerizable unsaturated groups in its molecule are preferable. The number of the radical polymerizable unsaturated groups is preferably 2 or more and 15 or less, more preferably 2 or more and 8 or less, and further preferably 2 or more and 6 or less from the viewpoint of being capable of improving scratch resistance and hardly causing setting shrinkage.

The content ratio of cured product of the curable resin in the surface protection layer is preferably 50 mass% or more, more preferably 60 mass% or more, and further preferably 70 mass% or more. Consequently, for example, scratch resistance and weather resistance of the surface protection layer can be more improved.

When an ultraviolet-curable resin is used as the ionizing radiation-curable resin, it is preferable to use a photopolymerization initiator together with the ultraviolet-curable resin. Examples of the photopolymerization initiator include an acetophenone compound, a benzoyl compound, an acylphosphine oxide compound, a benzophenone compound, a thioxanthone compound, and an aminobenzophenone compound. The amount of the used photopolymerization initiator is preferably 0.1 parts by mass or more and 5 parts by mass or less based on 100 parts by mass of the ultraviolet-curable resin.

As a purpose of adjusting the viscosity of a curable resin composition, a monofunctional (meth)acrylate such as methyl (meth)acrylate may be used as a diluent. As the diluent, a usual organic solvent other than the monofunctional (meth)acrylate may be used.

The surface protection layer may further contain particles. For example, the optical properties such as glossiness and haze of the surface protection layer, accordingly, the anti-glare properties can be finely adjusted by adding particles to the surface protection layer. For example, the anti-glare properties imparted by the surface protection layer are adjusted by shaping the surface of the surface protection layer by the surface uneven structure of the base film, and the anti-glare properties imparted by the surface protection layer may be finely adjusted by further adding particles to the surface protection layer.

Examples of the particles include organic particles and inorganic particles. Examples of the organic particles include synthetic resin particles such as (meth)acrylic resin particles, polycarbonate resin particles, and styrene resin particles. Examples of the inorganic particles include silica, alumina, zirconia, titania, kaolinite, iron oxide, diamond, and silicon carbide. In particular, (meth)acrylic resin particles are preferable among the particles from the viewpoint of being capable of suitably adjusting the anti-glare properties by the surface protection layer and being capable of increasing the transparency and improving the scratch resistance.

Examples of the shape of the particles include spherical, ellipsoidal, polyhedral, and scaly shapes. The spherical shape is preferable from the viewpoint of easily adjusting the anti-glare properties by the surface protection layer and easily improving the scratch resistance.

The average particle size of the particles is preferably 1 µm or more and more preferably 1.5 µm or more and is preferably 10 µm or less and more preferably 8 µm or less. When the average particle size is within the above range, transparency is secured and also excellent anti-glare properties and scratch resistance are obtained. A use of particles having a large average particle size tends to increase the haze of the surface protection layer and decrease the glossiness.

In the present disclosure, the average particle size means the average value (arithmetic average diameter) of particle sizes measured for randomly selected 100 non-aggregated particles in a cross-section of each layer in the thickness direction observed using a scanning electron microscope (SEM).

The thickness of the surface protection layer is preferably 0.3 times or more the average particle size of the particles, more preferably 0.4 times or more and further preferably 0.5 times or more and is preferably 4 times or less, more preferably 3.5 times or less, and further preferably 3 times or less. In such a design, for example, the balance between anti-glare properties a transparency can be more improved.

The content of the particles in the surface protection layer is preferably 1 part by mass or more based on 100 parts by mass of the cured product of the curable resin, more preferably 3 parts by mass or more, and further preferably 5 parts by mass or more and is preferably 20 parts by mass or less, more preferably 18 parts by mass or less, and further preferably 15 parts by mass or less. When the content of the particles is within the range above, for example, anti-glare properties, scratch resistance, and weather resistance can be more improved. When the content of the particles is the above upper limit or less, for example, decrease in weather resistance can be suppressed.

The surface protection layer may contain an additive. Examples of the additive include a weather resistance improving agent, a silicone compound, a polymerization inhibitor, a crosslinking agent, an antistatic agent, an adhesion improver, an antioxidant, a leveling agent, a thixotropy-imparting agent, a coupling agent, a plasticizer, an antifouling agent, an antifoaming agent, and a filler.

The surface protection layer may contain a weather resistance improving agent (hereinafter, also referred to as "weathering agent"). Molded bodies that are used outdoors are exposed to direct sunlight or wind and rain on a daily basis and are therefore required to have weather resistance. A use of a weathering agent can improve, for example, the weather resistance of the surface protection layer, accordingly, can maintain the feel of unevenness of the surface protection layer, suppress yellowing, and improve interlayer adhesion. Consequently, an anti-glare molded body described later can be used outdoors for a long time.

Examples of the weathering agent include an ultraviolet absorber and a light stabilizer.

The ultraviolet absorber absorbs harmful ultraviolet rays and improves weather resistance of the anti-glare molded body for a long time. The light stabilizer itself absorbs very little ultraviolet rays but efficiently captures harmful free radicals generated by ultraviolet rays.

Examples of the ultraviolet absorber include organic ultraviolet absorbers such as a benzotriazole ultraviolet absorber, a triazine ultraviolet absorber, a benzophenone ultraviolet absorber, an oxybenzophenone ultraviolet absorber, a salicylate ester ultraviolet absorber, and a cyano (meth)acrylate ultraviolet absorber; and inorganic ultraviolet absorbers such as titanium dioxide, cerium oxide, and zinc oxide. Among them, organic ultraviolet absorbers are preferable, and a triazine ultraviolet absorber is more preferable.

Examples of the triazine ultraviolet absorber include a hydroxyphenyltriazine ultraviolet absorber. Examples of the hydroxyphenyltriazine ultraviolet absorber include 2-(2-hydroxy-4-[1-octyloxycarbonylethoxy]phenyl)-4,6-bis(4-phenylphenyl)-1,3,5-triazine, 2-[4-[(2-hydroxy-3-dodecyoxypropyl)oxy]-2-hydroxyphenyl]-4,6-bis(2,4-dimethylphenyl)-1,3,5-triazine, 2,4-bis[2-hydroxy-4-butoxyphenyl]-6-(2,4-dibutoxyphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2-(4,6-diphenyl-1,3,5-triazin-2-yl)-5-[2-(2-ethylhexanoyloxy)ethoxy]phenol, and 2-[4-[(2-hydroxy-3-(2'-ethyl)hexyl)oxy]-2-hydroxyphenyl]-4,6-bis(2,4-dimethylphenyl)-1,3,5-triazine.

The content of the ultraviolet absorber in the surface protection layer is preferably 0.1 parts by mass or more based on 100 parts by mass of the cured product of the curable resin and more preferably 0.3 parts by mass or more and is preferably 10 parts by mass or less, more preferably 7 parts by mass or less, and further preferably 5 parts by mass or less. Consequently, for example, the weather resistance of the surface protection layer can be improved. When the content of the ultraviolet absorber is the above upper limit or less, for example, it is possible to suppress a decrease in the transparency of the surface protection layer and a decrease in the adhesion between the surface protection layer and a primer layer due to bleed-out of the ultraviolet absorber.

Examples of the light stabilizer include a hindered amine light stabilizer (HALS).

Examples of the hindered amine light stabilizer include 1,2,2,6,6-pentamethyl-4-piperidinyl (meth)acrylate, bis(1,2,2,6,6-pentamethyl-4-piperidyl) sebacate, bis(2,2,6,6-pentamethyl-4-piperidyl) sebacate, bis(1,2,2,6,6-pentamethyl-4-piperidinyl) sebacate, methyl (1,2,2,6,6-pentamethyl-4-piperidinyl) sebacate, 2,4-bis[N-butyl-N-(1-cyclohexyloxy-2,2,6,6-tetramethylpiperidin-4-yl)amino]-6-(2-hydroxyethylamine)-1,3,5-triazine, bis(1,2,2,6,6-pentamethyl-4-piperidyl) 2-(3,5-di-tert-butyl-4-hydroxybenzyl)-2'-n-butylmalonate, bis(1,2,2,6,6-pentamethyl-4-piperidyl) sebacate, bis(1-octyloxy-2,2,6,6-twtramethyl-4-piperidyl) sebacate, and tetrakis(2,2,6,6-tetramethyl-4-piperidyl)-1,2,3,4-butane tetraca rboxyl ate.

The content of the light stabilizer in the surface protection layer is preferably 1 part by mass or more based on 100 parts by mass of the cured product of the curable resin, more preferably 2 parts by mass or more, and further preferably 3 parts by mass or more and is preferably 10 parts by mass or less, more preferably 8 parts by mass or less, and further preferably 6 parts by mass or less. Consequently, for example, the weather resistance of the surface protection layer can be improved. When the content of the light stabilizer is the upper limit or less, for example, it is possible to suppress a decrease in the transparency of the surface protection layer and a decrease in the adhesion between the surface protection layer and a primer layer due to bleed-out of the light stabilizer.

The surface protection layer may contain a silicone compound. Consequently, for example, the weather resistance and scratch resistance of the surface protection layer can be improved, and excellent transparency can be obtained.

The silicone compound may be a silicone compound not having a reactive functional group, such as an amino group, an epoxy group, a mercapto group, a carboxy group, a hydroxy group, a (meth)acryloyl group, and an allyl group, or may be a silicone compound having a reactive functional group. Examples of the unreactive silicone compound include silicone oil consisting of polysiloxane, polyether-modified silicone oil, aralkyl-modified silicone oil, fluoroalkyl-modified silicone oil, long-chain alkyl-modified silicone oil, higher fatty acid ester-modified silicone oil, higher fatty acid amide-modified silicone oil, and phenyl-modified silicone oil. Examples of the silicone compound having a reactive functional group include a silicone compound having a (meth)acryloyl group, from the viewpoint of being capable of binding with the resin constituting the surface protection layer, suppressing bleed out due to the long period use, and maintaining the weather resistance for a long time.

The content of the silicone compound in the surface protection layer is preferably 0.05 parts by mass or more based on 100 parts by mass of the cured product of the curable resin and more preferably 0.1 parts by mass or more and is preferably 30 parts by mass or less, more preferably 10 parts by mass or less, and further preferably 5 parts by mass or less.

The curable resin composition may contain an organic solvent from the viewpoint of, for example, improving the application properties. Examples of the organic solvent include a hydrocarbon solvent, such as toluene, xylene, hexane, and octane; an alcohol solvent, such as ethanol, propanol, butanol, pentanol, hexanol, octanol, and decanol; a ketone solvent, such as acetone, methyl ethyl ketone, methyl isobutyl ketone, diisobutyl ketone, and cyclohexanone; and an ester solvent, such as ethyl acetate, butyl acetate, amyl acetate, ethyl butyrate, butyl butyrate, butyl stearate, methyl benzoate, methyl lactate, ethyl lactate, and butyl lactate.

The thickness of the surface protection layer is preferably 1 µm or more and more preferably 2 µm or more and is preferably 20 µm or less, more preferably 10 µm or less, and further preferably 6 µm or less. Consequently, for example, excellent anti-glare properties, scratch resistance, and weather resistance can be imparted to a transfer target. In the present disclosure, the thickness of each layer can be measured by a scanning electron microscope (SEM) photograph of a cross-section of each layer.

The surface protection layer is formed by, for example, as follows. A curable resin composition is applied to a base film at a desired thickness, and when an organic solvent is used, the organic solvent is dried and removed, to form a coating film (uncured resin layer). Subsequently, when a thermosetting resin is used, the coating film is cured by heating at a temperature necessary for curing. When an ionizing radiation-curable resin is used, the coating film is cured by irradiation with ionizing radiation. Thus, a surface protection layer can be formed. The curing treatment may be carried out after application of the curable resin composition and before formation of another layer or may be carried out after formation of another layer.

Examples of the method of applying a curable resin composition onto a base film include a dipping method, a flow coating method, a spray method, a spin coating method, a gravure coating method, a micro gravure coating method, a die coating method, a slit reverse method, a roll coating method, a reverse roll coating method, a comma coating method, a blade coating method, an air knife coating method, an offset method, and a bar coating method.

When electron beams are used as ionizing radiation, the acceleration voltage can be appropriately selected according to the resin to be used and the thickness of the layer, but an uncured resin layer is preferably cured with an acceleration voltage of 70 kV or more and 300 kV or less. The exposure dose of the electron beams is preferably 0.5 Mrad or more, more preferably 1 Mrad or more, and further preferably 3 Mrad or more and is preferably 30 Mrad or less, more preferably 20 Mrad or less, and further preferably 15 Mrad or less.

As an electron beam source, for example, various electron beam accelerators such as Cockcroft-Walton type, Van de Graaff type, resonant transformer type, insulated core transformer type, linear type, Dynamitron type, and high frequency type can be used.

When ultraviolet rays are used as ionizing radiation, for example, at least ultraviolet rays of a wavelength of 190 nm or more and 380 nm or less are preferably irradiated. Examples of the ultraviolet ray source include a xenon lamp, a low pressure mercury lamp, a high pressure mercury lamp, an ultrahigh pressure mercury lamp, a metal halide lamp, a carbon arc lamp, and a tungsten lamp.

The transfer film of the present disclosure may include a primer layer between the surface protection layer and the adhesive layer. The primer layer has, for example, a function of improving the adhesion between the surface protection layer and the adhesive layer.

The primer layer in one embodiment contains a resin material.

Examples of the resin material include a (meth)acrylic resin, a urethane resin, a butyral resin, polyolefin, chlorinated polyolefin, a vinyl chloride-vinyl acetate copolymer, and polyester. Among them, a urethane resin is preferable.

The urethane resin is preferably a urethane resin having a (meth)acrylic skeleton in the polyurethane polymer chain from the viewpoint of weather resistance and durability. Examples of the urethane resin having a (meth)acrylic skeleton in the polyurethane polymer chain include a urethane (meth)acrylic copolymer which is a copolymer of a urethane component and a (meth)acrylic component and resin in which a (meth)acrylic resin having a hydroxy group or an isocyanate group as a polyol component or a polyisocyanate component constituting polyurethane. Among them, the urethane (meth)acrylic copolymer is preferable. As the urethane (meth)acrylic copolymer, for example, a urethane meth)acrylic block copolymer is preferable.

From the viewpoint of the adhesion between the primer layer and the surface protection layer, the urethane (meth)acrylic copolymer may further have a polycarbonate skeleton or a polyester skeleton in the polyurethane polymer chain. Examples of the urethane (meth)acrylic copolymer include a polycarbonate urethane (meth)acrylic copolymer which is a copolymer of a polycarbonate urethane component and a (meth)acrylic component and a polyester urethane (meth)acrylic copolymer which is a copolymer of a polyester urethane component and a (meth)acrylic component.

The urethane (meth)acrylic copolymer can be obtained by, for example, a method by reacting a polyol and a polyisocyanate with a (meth)acrylic resin having at least two hydroxy groups in one molecule (see Japanese Unexamined Patent Application Publication No. 6-100653) or a method by reacting a (meth)acrylic monomer with a urethane prepolymer having unsaturated double bonds on both ends (see Japanese Unexamined Patent Application Publication No. 10-1524).

Examples of the urethane prepolymer include a polycarbonate urethane prepolymer obtained by a reaction between a polycarbonate diol and a diisocyanate and a polyester urethane prepolymer obtained by a reaction between a polyester diol and a diisocyanate. Examples of the diisocyanate include an aliphatic isocyanate such as hexamethylene diisocyanate; and an alicyclic isocyanate such as isophorone diisocyanate and hydrogenated xylylene diisocyanate. Examples of the (meth)acrylic monomer include (meth)acrylic acid and a (meth)acrylic acid alkyl ester in which the alkyl group has 1 or more and 6 or less carbon atoms.

Examples of the urethane resin include specifically a polycarbonate urethane (meth)acrylic copolymer, a polyester urethane (meth)acrylic copolymer, a polyether urethane (meth)acrylic copolymer, and a caprolactone urethane (meth)acrylic copolymer. These resin materials are preferable from the viewpoint of improving weather resistance and further the adhesion between the surface protection layer and the adhesive layer.

In the urethane resin, the urethane component/(meth)acrylic component (mass ratio) is preferably 20/80 or more, more preferably 50/50 or more, and further preferably 70/30 or more and is preferably 99/1 or less, more preferably 95/5 or less, and further preferably 95/5 or less. Consequently, for example, weather resistance can be more improved. The content of the (meth)acrylic component in the urethane resin is the proportion of the monomer unit constituting the (meth)acrylic skeleton based on the total mass of the urethane resin. The content of the (meth)acrylic component in the urethane resin is calculated by measuring the NMR spectrum of the urethane resin and determining the proportion of the peak area pertaining to the (meth)acrylic component to the total peak area.

The weight-average molecular weight of the urethane resin is preferably 10,000 or more and more preferably 30,000 or more and is preferably 100,000 or less and more preferably 80,000 or less. Consequently, for example, weather resistance can be more improved. The weight-average molecular weight in the present description is determined as a standard polystyrene conversion value by gel permeation chromatography (GPC).

The content ratio of the resin material in the primer layer is, for example, 50 mass% or more.

The primer layer may further contain particles. Consequently, for example, it is possible to suppress the occurrence of a blocking phenomenon where the adhesive layer and the base film come into close contact during the production process or storage of the transfer film.

Examples of the particles include inorganic particles and organic particles. Examples of the inorganic particles include silica, alumina, aluminum hydroxide, barium sulfate, calcium carbonate, and talc.

Examples of the shape of the particles include spherical, ellipsoidal, polyhedral, and scaly shapes.

The average particle size of the particles is preferably 0.1 µm or more and more preferably 0.5 µm or more and is preferably 10 µm or less, more preferably 8 µm or less, and further preferably 5 µm or less. When the average particle size is within the above range, the transparency is secured, and excellent blocking resistance is obtained.

The content of the particles in the primer layer is preferably 0.1 parts by mass or more based on 100 parts by mass of the resin material, more preferably 1 part by mass or more, and further preferably 3 parts by mass or more and is preferably 30 parts by mass or less, more preferably 25 parts by mass or less, and further preferably 20 parts by mass or less.

The primer layer may contain an additive. Examples of the additive include a weathering agent, an abrasion resistance improver, an infrared absorber, an antistatic agent, an adhesion improver, a leveling agent, a thixotropy-imparting agent, a coupling agent, a plasticizer, an antifoaming agent, a filler, and a coloring agent.

The primer layer may contain a weathering agent. Consequently, for example, the weather resistance of the primer layer can be improved, and the obtained anti-glare molded body can be used outdoors for a long period of time. Examples of the weathering agent include an ultraviolet absorber and a light stabilizer. The details of the ultraviolet absorber and light stabilizer are as described above.

The content of the ultraviolet absorber is preferably 0.1 parts by mass or more based on 100 parts by mass of the resin material constituting the primer layer, more preferably 3 parts by mass or more, and further preferably 10 parts by mass or more and is preferably 50 parts by mass or less, more preferably 40 parts by mass or less, and further preferably 35 parts by mass or less.

The content of the light stabilizer is preferably 0.1 parts by mass or more based on 100 parts by mass of the resin material constituting the primer layer, more preferably 1 part by mass or more, and further preferably 3 parts by mass or more and is preferably 15 parts by mass or less and more preferably 10 parts by mass or less.

The resin composition for primer layer may contain, for example, an isocyanate curing agent from the viewpoint of enhancing the curing the resin material. Examples of the isocyanate curing agent include tolylene diisocyanate, diphenylmethane diisocyanate, hexamethylene diisocyanate, xylylene diisocyanate, cyclohexane phenylene diisocyanate, and naphthalene-1,5-diisocyanate.

The amount of the used isocyanate curing agent in the resin composition for primer layer is preferably 1 part by mass or more based on 100 parts by mass of the resin material, more preferably 3 parts by mass or more, and further preferably 5 parts by mass or more and is preferably 40 parts by mass or less and more preferably 30 parts by mass or less from the viewpoint of improving the adhesion between the surface protection layer and the adhesive layer.

The thickness of the primer layer is preferably 0.1 µm or more and is preferably 10 µm or less and more preferably 5 µm or less. Consequently, for example, the adhesion between the surface protection layer and the adhesive layer can be more improved. The thickness of the primer layer is preferably smaller than the thickness of the adhesive layer.

The primer layer can be formed by, for example, applying a resin composition for primer layer containing the above-described components and an organic solvent as needed onto the surface protection layer by a known printing method or application method and performing drying and curing as needed.

In order to improve the adhesion between the surface protection layer and the primer layer, the surface protection layer may be surface-treated before formation of the primer layer. Examples of the method of surface treatment include corona discharge treatment, plasma treatment, chromium oxidation treatment, flame treatment, hot air treatment, and ozone/ultraviolet treatment.

In order to improve the adhesion between the surface protection layer and the primer layer, the crosslinking and curing of the surface protection layer are kept in a semi-cured state, and then the resin composition for primer layer is applied to the surface protection layer in the semi-cured state, and the surface protection layer may be then completely cured by irradiation with ionizing radiation.

The transfer film of the present disclosure includes an adhesive layer (bonding layer).

The adhesive layer has a function of adhering the transfer film to the surface of a transfer target. In one embodiment, the adhesive layer constitutes the surface layer of the transfer layer facing away from the base film. The adhesive layer is a layer that is in contact with the transfer target after the transfer. Consequently, the transfer layer can be transferred and attached well to the transfer target.

In the present disclosure, the surface protection layer can be transferred from the transfer film onto a transfer target with good adhesion by attaching the transfer film to the transfer target such that the adhesive layer is brought into contact with a surface of the transfer target and then peeling off the base film.

The adhesive resin that can be used in the adhesive layer is preferably, for example, a heat-fusible resin such as a (meth)acrylic resin, polyolefin, chlorinated polyolefin, a vinyl chloride-vinyl acetate copolymer, polyamide, polyester, chlorinated rubber, a urethane resin, an epoxy resin, and a styrene resin. Among them, from the viewpoint of improving weather resistance, a (meth)acrylic resin such as polymethyl methacrylate is preferable.

The content ratio of the adhesive resin in the adhesive layer is preferably 50 mass% or more, more preferably 60 mass% or more, and further preferably 70 mass% or more.

The adhesive layer may contain an additive. Examples of the additive include a weathering agent such as an ultraviolet absorber and a light stabilizer, an abrasion resistance improver, an infrared absorber, an antistatic agent, an adhesion improver, a leveling agent, a thixotropy-imparting agent, a coupling agent, a plasticizer, an antifoaming agent, a filler, and a coloring agent.

The adhesive layer may contain a weathering agent. The details of the weathering agent are as described above.

The content of the ultraviolet absorber in the adhesive layer may be 0.1 parts by mass or more based on 100 parts by mass of the adhesive resin, 1 part by mass or more, or 3 parts by mass or more and may be 25 parts by mass or less, 20 parts by mass or less, or 15 parts by mass or less. The content of the light stabilizer in the adhesive layer may be 0.05 parts by mass or more based on 100 parts by mass of the adhesive resin, 0.5 parts by mass or more, or 1 part by mass or more and may be 7 parts by mass or less, 5 parts by mass or less, or 5 parts by mass or less.

The thickness of the adhesive layer is preferably 1 µm or more and is preferably 12 µm or less and more preferably 6 µm or less. Consequently, for example, the transfer layer can be well adhered to the transfer target, and excellent transparency can be secured.

The thickness of the adhesive layer is preferably larger than the thickness of the primer layer.

The adhesive layer can be formed by, for example, applying a composition containing a component constituting the adhesive layer (composition for adhesive layer) onto the surface protection layer or the primer layer and drying it as needed.

The transfer film of the present disclosure may include a cover film (protection film) on the adhesive layer. Specifically, a cover film may be attached onto the adhesive layer. Consequently, the adhesive layer surface can be well protected, which is preferable for storing the transfer film. The cover film is peeled off from the adhesive layer when the transfer film is used to expose the adhesive layer, and the transfer film is attached to a transfer target through this adhesive layer.

The cover film is composed of, for example, a resin material such as polyolefin.

The anti-glare molded body of the present disclosure includes a molded body and a surface protection film disposed on at least a portion of a surface of the molded body. The surface protection film is a transfer layer of the transfer film of the present disclosure, and the surface protection layer included in the transfer layer constitutes at least a portion of the surface layer of the anti-glare molded body.

In one embodiment, as shown in Fig. 3, the anti-glare molded body 2 includes a molded body 30 and a transfer layer 20 provided on the surface of the molded body 30. In the embodiment of Fig. 3, the transfer layer 20 includes an adhesive layer 24, a primer layer 23, and a surface protection layer 22 in this order from the side close to the molded body 30. Accordingly, the anti-glare molded body 2 includes the adhesive layer 24, the primer layer 23, and the surface protection layer 22 in this order on the molded body 30. The base film 10 only needs to be peeled off when the anti-glare molded body 2 is used.

The above molded body is a transfer target (body to be transferred) to which the transfer layer of the transfer film of the present disclosure is transferred.

Examples of the material of the molded body at a portion where the transfer layer of the transfer film of the present disclosure is transferred include a resin material. Examples of the resin material include polycarbonate; a (meth)acrylic resin such as polymethyl (meth)acrylate and poly(meth)acrylate; polyolefin such as polyethylene and polypropylene; cyclic polyolefin; polystyrene; an acrylonitrile-butadiene-styrene (ABS) copolymer; a vinyl resin such as polyvinyl alcohol, polyvinyl acetate, polyvinyl chloride, and polyvinyl fluoride; polyester such as polyethylene terephthalate and polyethylene naphthalate; and polyamide, polyimide, polysulfone, polyether sulfone, polyether ketone, and polyether imide.

The molded body is preferably a resin molded body constituted of a resin material and more preferably a transparent resin molded body constituted of a transparent resin material. The total luminous transmittance of the transparent resin molded body is, for example, 50% or more and may be 70% or more or 80% or more.

Examples of the transparent resin material include polycarbonate; a (meth)acrylic resin such as polymethyl methacrylate; polyester such as polyethylene terephthalate and polyethylene naphthalate; and an ABS copolymer. Among them, polycarbonate is preferable because of its excellent transparency and shock resistance.

For example, the molded body is used outdoors, in particular, is used in application where weather resistance is required because of being exposed to direct sunlight or wind and rain on a daily basis. Examples of the molded body include an exterior material for building structures, an exterior material for vehicles, ships, and airplanes, an exterior material for industrial machinery, a component of solar cell covers or solar cell substrates, and various lenses.

Examples of the exterior material for building structures (building material) include a transparent resin molded body constituting soundproof walls or windshield walls on general roads, expressways, and so on, a window material, a balcony partition, a roof material for terraces or carports, and a transparent resin molded body constituting agricultural greenhouses.

The anti-glare molded body of the present disclosure in one embodiment has excellent transparency and anti-glare properties and is therefore particularly suitable as a transparent resin molded body constituting soundproof walls or windshield walls on general roads, expressways, and so on.

Examples of the exterior material for vehicles include window materials such as a side window, a rear window, a roof window, a front window, and a quarter window; a headlight cover, an indicator lamp, and a reflector. Examples of the vehicle include an automobile, a railway vehicle, a construction machine, and a light vehicle such as a golf cart. Examples of the exterior material for industrial machinery include a window material for visual recognition of a machine tool. Examples of the lens include a traffic light lens.

The anti-glare molded body of the present disclosure is obtained, for example, using the transfer film of the present disclosure by transferring the transfer layer of the transfer film onto at least a portion of the surface of a molded body. More specifically, the transfer film of the present disclosure is disposed on at least a portion of the surface of a molded body such that the adhesive layer of the transfer film is in contact with the surface of the molded body. The transfer film may be disposed under heating and/or pressure. Subsequently, the base film of the transfer film is peeled off from the transfer layer, specifically, from the surface protection layer. Thus, an anti-glare molded body is obtained. As the transfer method, for example, a heat transfer method such as a roll transfer method and a press transfer method or an in-mold molding method can be adopted.

The base film may be used as a protection film for the anti-glare molded body without being immediately peeled off from the transfer layer. In such a case, the base film may be peeled off from the transfer layer before the anti-glare molded body is used.

After the transfer film is disposed on the surface of the molded body, the obtained anti-glare molded body may be further subjected to processing such as a bending process. The processing may be performed either before or after peeling off the base film.

The anti-glare molded body of the present disclosure may be manufactured by, for example, simultaneously forming the molded body and disposing the transfer film. For example, a resin is injected on the adhesive layer of the transfer film to unify the transfer film and resin molded body (injection molded body). Subsequently, the base film is peeled off from the transfer layer. In this case, examples of the method for forming the resin molded body include various injection molding methods such as an in-mold molding method, an insert molding method, an injection molding simultaneous decoration method, a blow molding method, and a gas injection molding method.

The present disclosure relates to, for example, the following [1] to [9]:
[1] A transfer film comprising a base film and a transfer layer, wherein the transfer layer includes a surface protection layer and an adhesive layer, the surface protection layer forms a surface layer of the transfer layer facing the base film, a test piece obtained by transferring the transfer layer to a 2-mm thickness polycarbonate board has a haze of 5% or more and 30% or less, and a 60-degree specular glossiness measured for a surface of the surface protection layer of the test piece is 60% or more and 120% or less;
[2] The transfer film according to the above [1], wherein the base film is in contact with the surface protection layer of the transfer layer;
[3] The transfer film according to the above [1] or [2], wherein a surface of the surface protection layer facing the base film has a maximum height Rz of 0.5 µm or more and 3 µm or less;
[4] The transfer film according to any one of the above [1] to [3], wherein the surface protection layer contains a particle having an average particle size of 1 µm or more and 10 µm or less;
[5] The transfer film according to any one of the above [1] to [4], further comprising a primer layer between the surface protection layer and the adhesive layer;
[6] The transfer film according to any one of the above [1] to [5], wherein either one or both of the surface protection layer and the adhesive layer contain a weather resistance improving agent;
[7] The transfer film according to the above [5], wherein the primer layer contains a weather resistance improving agent;
[8] The transfer film according to any one of the above [1] to [7], wherein the transfer film is for transferring the transfer layer onto at least a portion of a surface of a molded body for outdoor use; and
[9] An anti-glare molded body comprising a molded body and a surface protection film disposed on at least a portion of a surface of the molded body, wherein the surface protection film is the transfer layer of the transfer film according to any one of the above [1] to [8], and the surface protection layer of the transfer layer forms at least a portion of a surface layer of the anti-glare molded body.

### EXAMPLES

The transfer film of the present disclosure will now be described based on Examples, but is not limited to Examples. In the description below, "part(s) by mass" is simply referred to as "part(s)".

### [EXAMPLE 1]

As a base film, a polyethylene terephthalate film (PET film) having a thickness of 50 µm was used. The PET film had a haze (Hz) of 30%, a total luminous transmittance (Tt) of 85%, a 60-degree specular glossiness of 86%, an Ra of 0.1 µm, an Rz of 0.8 µm, and an RSm of 45.8 µm.

A curable resin composition for surface protection layer shown below was applied to one surface of the base film to form an uncured resin layer. The uncured resin layer was irradiated with electron beams with 90 kV and 7 Mrad (70 kGy) for crosslinking and curing of the resin layer to form a surface protection layer having a thickness of 3 µm. The surface of the surface protection layer was subjected to corona discharge treatment, and a resin composition for primer layer below was then applied to the surface to form a primer layer having a thickness of 3 µm. A heat-fusible resin (acrylic resin) was applied onto the primer layer to form an adhesive layer having a thickness of 4 µm. Thus, a transfer film was obtained. The transfer film includes a PET film as the base film and a transfer layer disposed on the PET film, and the transfer layer includes a surface protection layer, a primer layer, and an adhesive layer.

### <Curable resin composition for surface protection layer>

Curable resins
- Six-functional urethane (meth)acrylate: 60 parts
- Caprolactone urethane (meth)acrylate: 40 parts

The following materials were added to 100 parts of the above curable resins.
- Ultraviolet absorber: 1.5 parts
   (Tinuvin 479 (trade name), 2-(2-hydroxy-4-[1-octyloxycarbonylethoxy]phenyl)-4,6-bis(4-phenylphenyl)-1,3,5-triazine, BASF Japan Ltd.)
- Light stabilizer: 3 parts
   (Sanol LS-3410 (trade name), 1,2,2,6,6-pentamethyl-4-piperidinyl methacrylate, Nippon Nyukazai Co., Ltd.)
- Unreactive silicone compound: 0.2 parts
   (Polyether-modified silicone oil)
- Particle: 2 parts
   (Silica particle, average particle size: 2 µm)

### <Resin composition for primer layer>

- Polycarbonate urethane (meth)acrylic copolymer: 100 parts
   (The mass ratio of the urethane component to the (meth)acrylic component in the polycarbonate urethane acrylic copolymer was 70/30.)
- Hydroxyphenyltriazine ultraviolet absorber: 17 parts
   (Tinuvin 400 (trade name), 2-[4-[(2-hydroxy-3-dodecyoxypropyl)oxy]-2-hydroxyphenyl]-4,6-bis(2,4-dimethylphenyl)-1,3,5-triazine, BASF Japan Ltd.)
- Hydroxyphenyltriazine ultraviolet absorber: 13 parts
   (Tinuvin 479 (trade name), 2-(2-hydroxy-4-[1-octyloxycarbonylethoxy]phenyl)-4,6-bis(4-phenylphenyl)-1,3,5-triazine, BASF Japan Ltd.)
- Hindered amine light stabilizer: 8 parts
   (Tinuvin 123 (trade name), bis(1-octyloxy-2,2,6,6-tetramethyl-4-piperidyl) sebacate, BASF Japan Ltd.)
- Antiblocking agent: 9 parts
   (Silica particle, average particle size: 3 µm)
- Curing agent: 25 parts
   (Hexamethylene diisocyanate)

### [EXAMPLE 2]

A transfer film was obtained as in EXAMPLE 1 except that a 50 µm thickness PET film having a haze of 72%, a total luminous transmittance of 85%, a 60-degree specular glossiness of 49%, an Ra of 0.2 µm, an Rz of 1.4 µm, and an RSm of 67.1 µm was used as the base film.

### [EXAMPLE 3]

A transfer film was obtained as in EXAMPLE 2 except that 10 parts of a (meth)acrylic resin particle (average particle size: 2 µm) was further added to the curable resin composition for surface protection layer.

### [EXAMPLE 4]

A transfer film was obtained as in EXAMPLE 2 except that 10 parts of a (meth)acrylic resin particle (average particle size: 6 µm) was further added to the curable resin composition for surface protection layer.

### [COMPARATIVE EXAMPLE 1]

A transfer film was obtained as in EXAMPLE 1 except that a 50 µm thickness PET film having a haze of 2.3%, a total luminous transmittance of 88%, a 60-degree specular glossiness of 171%, an Ra of 0 µm, an Rz of 0.2 µm, and an RSm of 71.6 µm was used as the base film.

### [COMPARATIVE EXAMPLE 2]

A transfer film was obtained as in EXAMPLE 1 except that a 50 µm thickness PET film having a haze of 83%, a total luminous transmittance of 68%, a 60-degree specular glossiness of 14%, an Ra of 0.4 µm, an Rz of 2.8 µm, and an RSm of 41.0 µm was used as the base film.

### [Transfer]

The transfer films obtained in EXAMPLES and COMPARATIVE EXAMPLES were each attached to one surface of a 2-mm thickness polycarbonate board as a transfer target (haze: 0.8%, total luminous transmittance: 88.4%, 60-degree specular glossiness: 170.0%) while heating at 160°C in a state that the adhesive layer of the transfer film was in contact with the polycarbonate board. Consequently, anti-glare molded bodies with base film each including a polycarbonate board, an adhesive layer, a primer layer, a surface protection layer, and a base film in this order were obtained. The base film was peeled off to obtain each anti-glare molded body (test piece).

### [Anti-glare properties]

The obtained test piece was mounted on a table such that the surface protection layer side is the upper surface, and reflection (reflected image) of a 38 W fluorescent lamp was visually evaluated as anti-glare properties (AG properties) by the following 6 grades. The distance between the fluorescent lamp and the test piece was set to 2 m. 1 is better, and 6 is worse.
1: The outline of light from the fluorescent lamp cannot be discerned at all;
2: The outline of light from the fluorescent lamp can be hardly discerned;
3: The outline of light from the fluorescent lamp can be slightly discerned;
4: The light from the fluorescent lamp is blurry, but the outline can be discerned;
5: The light from the fluorescent lamp is hardly blurred, and the outline also can be discerned; and
6: The light from the fluorescent lamp is not blurred at all, and the outline also can be clearly discerned.

### [Transparency]

The obtained test piece was disposed between an observer and a photograph such that the surface protection layer faced the observer and the polycarbonate board faced the photograph. The distance between the observer and the test piece was set to 30 cm, and the distance between the test piece and the photograph was set to 1 m. As the transparency when the photograph was observed from the surface protection layer side via the test piece, the visibility of the photograph was evaluated on the following 6 grades. 1 is better, and 6 is worse.
1:The photograph image can be clearly recognized;
2: The photograph image is hardly blurred;
3: The photograph image is slightly blurred;
4: The photograph image is blurred overall;
5: The photograph image is cloudy overall, but it is possible to recognize what kind of image it is; and
6: The photograph image is cloudy overall, and it is impossible to recognize what kind of image it is.

### [Weather resistance test]

A weather resistance test was performed by using a super accelerated weathering tester (manufactured by Iwasaki Electric Co., Ltd., trade name: Eye Super UV tester, model number: SUV-W23) and by repeating a cycle consisting of the following (A), (B), and (C) for test pieces. This cycle was repeated 21 times to perform a weather resistance test for 500 hours.
(A) A test piece is irradiated with ultraviolet rays at an illumination of 100 mW/cm² for 20 hours in an atmosphere of a black panel temperature of 63°C and a humidity of 50% RH;
(B) The test piece is water sprayed (shower) for 30 seconds; and
(C) The test piece is maintained in an atmosphere of a humidity of 98%RH for 4 hours.

### (No irradiation with ultraviolet rays)

### [Glossiness]

The 60-degree specular glossiness (Gs60°) of the base film and test pieces was measured in accordance with JIS Z8741-1997 using a glossmeter (manufactured by BYK, "Micro-Tri-Gloss") at an incidence angle of 60°. In the test pieces, the glossiness of the surface of the surface protection layer was measured.

### [Total luminous transmittance, diffuse luminous transmittance, and haze]

The total luminous transmittance (Tt), diffuse luminous transmittance (Td), and haze (Hz) of the base film and test pieces were measured in accordance with JIS K7105 using a haze meter (manufactured by Toyo Seiki-Seisaku-sho, Ltd., "direct-reading haze meter"). The test piece was disposed such that the polycarbonate board faced the photodetector and the surface protection layer faced the light source.

### [Surface shape]

The arithmetic average roughness Ra, maximum height Rz, and mean length RSm of roughness curve element of the base film and test pieces were determined in accordance with JIS B0601-2001 using a shape analysis laser microscope [Keyence Corporation, "VK-X1000"] and based on a curve obtained by calculating the uneven shape of the surface. In the test piece, the measurement was performed for the surface of the surface protection layer.

### [Table 1]

**Table 1**

| | | | COMPARATIVE EXAMPLE 1 | EXAMPLE 1 | EXAMPLE 2 | EXAMPLE 3 | EXAMPLE 4 | COMPARATIVE EXAMPLE 2 |
|---|---|---|---|---|---|---|---|---|
| Anti-glare property | | | 5 | 4 | 3 | 2 | 2 | 1 |
| Transparency | | | 1 | 2 | 3 | 4 | 4 | 5 |
| Optical properties before and after weather resistance test | Gs60° (%) | 0h | 147.7 | 99.9 | 65.5 | 66.0 | 62.0 | 20.0 |
| | | 500h | 151.0 | 101.0 | 64.7 | 62.7 | 56.2 | 19.1 |
| | Tt (%) | 0h | 88.7 | 87.4 | 87.3 | 87.4 | 87.4 | 88.0 |
| | | 500h | 88.8 | 87.8 | 87.7 | 87.6 | 84.2 | 87.7 |
| | Td (%) | 0h | 2.0 | 7.1 | 17.9 | 19.2 | 22.2 | 45.6 |
| | | 500h | 2.1 | 6.3 | 16.3 | 17.9 | 21.5 | 44.5 |
| | Hz (%) | 0h | 2.3 | 8.2 | 20.4 | 21.9 | 25.3 | 51.5 |
| | | 500h | 2.3 | 7.1 | 18.5 | 20.3 | 25.4 | 50.1 |
| Surface roughness | Ra(µm) | | 0.0 | 0.1 | 0.2 | 0.2 | 0.2 | 0.4 |
| | Rz(µm) | | 0.3 | 0.9 | 1.6 | 2.2 | 1.8 | 3.0 |
| | RSm(µm) | | 64.7 | 45.5 | 45.4 | 46.5 | 45.7 | 44.5 |

As a person skilled in the art would understand, transfer film and so on of the present disclosure are not limited to the description of EXAMPLES above, and the above EXAMPLES and description are merely for illustrating the principle of the present disclosure, and various modifications and improvements can be made without departing from the gist and scope of the present disclosure, and all such modifications and improvements are included within the scope of the claimed present disclosure. Furthermore, the scope claimed by the present disclosure includes not only the claims but also equivalents thereof.

### Reference Signs List

- 1: transfer film
- 2: anti-glare molded body
- 10: base film
- 20: transfer layer
- 22: surface protection layer
- 23: primer layer
- 24: adhesive layer
- 30: molded body (transfer target)

## Claims

1. A transfer film comprising a base film and a transfer layer, wherein
the transfer layer includes a surface protection layer and an adhesive layer,
the surface protection layer forms a surface layer of the transfer layer facing the base film,
a test piece obtained by transferring the transfer layer to a 2-mm thickness polycarbonate board has a haze of 5% or more and 30% or less, and
a 60-degree specular glossiness measured for a surface of the surface protection layer of the test piece is 60% or more and 120% or less.

2. The transfer film according to claim 1, wherein the base film is in contact with the surface protection layer of the transfer layer.

3. The transfer film according to claim 1 or 2, wherein a surface of the surface protection layer facing the base film has a maximum height Rz of 0.5 µm or more and 3 µm or less.

4. The transfer film according to any one of claims 1 to 3, wherein the surface protection layer contains a particle having an average particle size of 1 µm or more and 10 µm or less.

5. The transfer film according to any one of claims 1 to 4, further comprising a primer layer between the surface protection layer and the adhesive layer.

6. The transfer film according to any one of claims 1 to 5, wherein either one or both of the surface protection layer and the adhesive layer contain a weather resistance improving agent.

7. The transfer film according to claim 5, wherein the primer layer contains a weather resistance improving agent.

8. The transfer film according to any one of claims 1 to 7, wherein the transfer film is for transferring the transfer layer onto at least a portion of a surface of a molded body for outdoor use.

9. An anti-glare molded body comprising a molded body and a surface protection film disposed on at least a portion of a surface of the molded body, wherein
the surface protection film is the transfer layer of the transfer film according to any one of claims 1 to 8, and the surface protection layer of the transfer layer forms at least a portion of a surface layer of the anti-glare molded body.
